# EUROPÄISCHE PATENTSCHRIFT

(11) **EP 1 405 713 B1**
(45) Veröffentlichungstag und Bekanntmachung des Hinweises auf die Patenterteilung: **28.09.2005**
(21) Anmeldenummer: 02022073.7
(22) Anmeldetag: 02.10.2002
(51) Int. Cl.: B29C 65/16, B23K 26/06

(54) **Verfahren und Vorrichtung zum Verbinden von Werkstücken aus Kunststoff in dreidimensionaler Form mittels Laserstrahl**
Process and device for joining three-dimensional plastic parts by a laser beam
Procédé et dispositif de jonction de pièces tridimensionnelles en matière plastique à l'aide d'un faisceau laser

(43) Veröffentlichungstag der Anmeldung: 07.04.2004
(73) Patentinhaber: Leister Process Technologies, 6060 Sarnen (CH)
(72) Erfinder: Chen, Jie-Wei, 6055 Alpnach Dorf (CH); Niederberger, Adolf, 6056 Kägiswil (CH)
(74) Vertreter: Klocke, Peter

(56) Entgegenhaltungen:
- EP-A- 1 366 890
- DE-A- 4 319 742
- SE-C- 510 621
- HAENSCH D ET AL: "ENTSCHEIDEND SIND DIE NAEHTE" LASER PRAXIS, CARL HANSER VERLAG, MUENCHEN, DE, Nr. 2, Juni 1999 (1999-06), Seiten 16-18, XP000831529 ISSN: 0937-7069
- PATENT ABSTRACTS OF JAPAN vol. 007, no. 291 (M-265), 27. Dezember 1983 (1983-12-27) -& JP 58 163587 A (TOKYO SHIBAURA DENKI KK), 28. September 1983 (1983-09-28)
- PATENT ABSTRACTS OF JAPAN vol. 008, no. 002 (M-266), 7. Januar 1984 (1984-01-07) -& JP 58 166168 A (TOKYO SHIBAURA DENKI KK), 1. Oktober 1983 (1983-10-01)

## Beschreibung

Die vorliegende Erfindung betrifft ein Verfahren und eine Vorrichtung zum Verbinden von Werkstücken aus Kunststoff, wobei das obere, einer Laserquelle zugewandte Werkstück aus einem für den Laserstrahl transparenten Material und das untere Werkstück aus einem für den Laserstrahl absorbierende Material besteht, so dass die aneinandergrenzenden Kontaktflächen der beiden Werkstücke aufschmelzen und bei der anschließenden Abkühlung unter Druck sich miteinander verbinden.

Diese Methode des Kunststoffschweißens mit Laserstrahl ist allgemein bekannt und wird auch als Durchstrahlschweißen bezeichnet. Für diese Kunststoffschweißmethode ist es wichtig, dass während des Schweißvorgangs die Werkstücke miteinander verspannt werden, da eine wichtige Voraussetzung für eine gute Schweißverbindung der Kunststoffe mittels Laserstrahlung nicht nur die Energiedosierung, sondern auch der saubere mechanische Kontakt zwischen den beiden miteinander zu verbindenden Fügeflächen ist. Hierzu sind verschiedene Verfahren und Vorrichtungen bekannt, die insbesondere bei flächigen Teilen eine ausreichende Anpresskraft ermöglichen.

Für zweidimensionale Schweißkonturen ist eine gute Spannbedingung relativ leicht herzustellen. Sobald jedoch eine Schweißkontur in dreidimensionaler Form an dreidimensionalen Teilen erstellt werden soll, ist der mechanische Kontakt der miteinander zu verbindenden Teile, insbesondere wenn die Form der Teile sich immer wieder ändert, technisch sehr schwierig zu realisieren. Problematisch ist dabei sowohl die gleichmäßige Verteilung der Spannkraft auf die gesamte Kontur als auch die Dosierung des Spanndruckes.

Die SE 510 621 beschreibt ein Verfahren und eine Vorrichtung zum Verbinden fortlaufender Materialbahnen aus Faserstoff und/oder Kunststofffilm miteinander oder mit Absorbtionskörpern, wobei wenigstens eine der aneinandergrenzenden Materialbahnen einen thermoplastischen Bestandteil umfasst. Die beiden von Rollen ablaufenden Materialbahnen werden im Spalt eines Walzenpaares zusammengeführt und dort mit einer Reihe von Laserstrahlen erwärmt und miteinander verschweißt. In einer bevorzugten Ausführungsform ist eine der Walzen hohl und weist optische Elemente zur Umlenkung des seitlich einfallenden Laserstrahls auf. Auf der Wandung dieser rotierenden Walze sind mehrere umlaufende zueinander versetzte Bünde angeordnet, welche die obere Materialbahn fest gegen die untere Materialbahn pressen. Jeder dieser Bünde besitzt eine Vielzahl von Bohrungen, durch die der Laserstrahl beim Zusammendrücken austritt und die Materialien miteinander verscheißt.

Die EP 1 366 890 A1 beschreibt eine ähnliche Vorrichtung und ein Verfahren zum Verbinden von endlosen Kunststoffmaterialen mittels der Durchstrahltechnik. Gemäß der Erfindung werden die Materialen durch zwei gegenläufige gegeneinanderpressende Rollen geführt. Die erste Rolle besteht aus einem laserstrahldurchlässigen Material und ist rohrförmig ausgebildet. Die zweite Rolle ist aus einem an der Oberfläche leicht deformierbaren Material ausgebildet, so dass sich deren Oberfläche an die Form der ersten Rolle anpassen kann. In der ersten Rolle sind Einrichtungen zur Erzeugung eines Laserstrahls an der Kontaktfläche zwischen den zu verbindenden Materialen angeordnet. Der Strahl wird dabei als linienförmiger Laserstrahl längs zur Bewegungsrichtung der Materialien ausgebildet, so dass beim Durchlauf eine kontinuierliche Erwärmung des Materials bis zum Schmelzpunkt erfolgt. Mittels dieses Verfahrens und der Vorrichtung ist eine kontinuierliche Verbindung bei hoher Geschwindigkeit möglich.

Der vorliegenden Erfindung liegt daher die Aufgabe zugrunde, eine Möglichkeit vorzuschlagen, die das Konturschweißen von Werkstücken aus Kunststoff in dreidimensionaler Form ohne spezielle Spannvorrichtung erlaubt.

Diese Aufgabe wird erfindungsgemäß durch ein Verfahren und eine Vorrichtung mit den Merkmalen des unabhängigen Verfahrensanspruchs und des Vorrichtungsanspruchs gelöst. Weitere vorteilhafte Ausgestaltungen sind den jeweiligen rückbezogenen Unteransprüchen angegeben.

Gemäß dem erfindungsgemäßen Verfahren erfolgt das Lenken des Laserstrahls auf die zu verbindende Stelle und das mechanische Zusammendrücken der Werkstücke gleichzeitig durch einen Bearbeitungskopf. Dabei kann das Zusammendrücken der Werkstücke entweder punktuell genau an der Stelle erfolgen, an der der Laserstrahl auftritt, oder auch flächig in einem Bereich um die Auftreffstelle des Lasers. Es ist auch möglich, die Werkstücke entlang einer Linie quer zur Relativbewegung des Laserstrahls und der Werkstücke auf der sich auch der Laserstrahl befindet, zusammenzupressen.

Damit bietet die Erfindung grundsätzlich die Möglichkeit, die benötigte Spannkraft gleichzeitig mit dem Laserstrahl entlang einer programmierten Schweißkontur kontinuierlich, aber stets punktuell, entlang einer Linie oder in einem bestimmten Bereich an die Stelle zu bringen, an der der Schweißprozess stattfindet und die Spannkraft wirklich benötigt wird. Diese spezielle Schweiß- und Anpressfunktion wird durch einen Bearbeitungskopf übertragen, der die mechanische Andrückung und auch die Energieübertragung erlaubt.

Da die relative Bewegung zwischen dem Bearbeitungskopf und den zu verschweißenden Werkstücken gemäß der Erfindung ständig unter mechanischer Berührung abläuft, werden vorzugsweise die Werkstücke an der Auftreffstelle des Lasers zusammengepresst, wobei vorteilhafterweise der Laserstrahl über eine zweckmäßigerweise drehbare für IR-Strahlung transparente Kugel oder Rolle, beispielsweise aus Glas oder Kunststoff, auf die Kontaktfläche fokussiert wird. Die Kugel ist in alle Richtungen drehbar, um eine unnötige mechanische Reibung zu verhindern. Diese drehbare Kugel, die ständig gegen das obere Werkstück gedrückt wird, verhält sich dabei auch wie eine Linse, mit der die Laserstrahlung präzise auf die Kontaktstelle fokussiert werden kann. Für das Schweißen einer Linie, insbesondere geraden Linie, oder einem breiten Linie (Streifen) auf einer wellenförmigen Oberfläche kann eine Rolle über die Oberfläche bewegt werden. Der Laserstahl kann dabei selbst als Linie in Vorschubrichtung oder quer zur Vorschubrichtung auftreffen. Vorzugsweise wird die Fokusebene des Laserstrahls mittels eines in den Bearbeitungskopf integrierten Linsensystems eingestellt.

Die Bewegung dieses Bearbeitungskopfes betreffend die Bewegungsgeschwindigkeit, den Bewegungsweg und die Haltung des Kopfes kann von einem Robotersystem präzise gesteuert werden. Die gewünschte Spannkraft kann durch programmierbare Roboterposition definiert werden. Minimale formgebundene Abweichungen werden über einen im Bearbeitungskopf integrierten Federkörper ausgeglichen. Die reale Andrückkraft wird durch die Messung des Drehmoments innerhalb des Robotersystems geregelt.

Gemäß einer bevorzugten Ausbildung des Verfahrens wird das Schweißverfahren über zwei Schritte realisiert, derart, dass in einem ersten Schritt die Werkstücke an einer oder mehreren definierten Stelle durch punktuelle Schweißung mit dem Bearbeitungskopf fixiert werden und anschließend in einem zweiten Schritt die Kontur für die vollständige Verbindung abgefahren wird. Dadurch werden keine zusätzlichen mechanischen Fixierungen benötigt, die schwierig und aufwendig zu realisieren sind. Ein weiterer Vorteil des ersten Schrittes liegt darin, dass insbesondere bei dünnen Materialien, durch eine Materialdeformation der Werkstücke während des 3D-Konturschweißens eventuell eine Mitbewegung der zu verschweißenden. Werkstücke stattfindet, die hinsichtlich der Genauigkeit des Schweißvorganges unerwünscht ist. Verfahrensmäßig kann vor der Punktschweißung das obere Werkstück durch ein zweites Robotersystem positioniert werden. Bei dem Verfahren ist die Haltung des Bearbeitungskopfes für die Schweißqualität äußerst wichtig. Im Hinblick auf die Funktionen des mechanischen Andrückens und der zielgerechten Energieübertragung muss der Bearbeitungskopf stets senkrecht zu der Kontaktebene gehalten werden. Diese räumliche Haltung kann durch ein mehrachsiges Robotersystem präzise programmiert werden.

Die erfindungsgemäße Vorrichtung umfasst den Bearbeitungskopf mit Fokussiereinrichtungen für den Laserstrahl auf die Kontaktfläche und Druckeinrichtungen zum Zusammenpressen der Werkstücke. Vorzugsweise weist der Bearbeitungskopf einen Hohlraum auf, in den das Ende einer Lichtleitfaser zum Einkoppeln des Laserstrahls hineinragt. In dem Hohlraum befinden sich optische Einrichtungen zum Formen und zum Lenken des Laserstrahls. An seinem unteren Ende ist die transparente Kugel oder Rolle drehbar gelagert. In den Bearbeitungskopf kann vorteilhafterweise ein Temperaturmessgerät, beispielsweise ein Pyrometer eingekoppelt werden.

Die Erfindung ermöglicht somit die Sicherheit der Schweißqualität bei dreidimensionalen Anordnungen und erlaubt gleichzeitig eine hohe Flexibilität bei unterschiedlichen Schweißvorgängen ohne teure und aufwendige Spannwerkzeuge.

Nachfolgend wird die Erfindung anhand von Ausführungsbeispielen näher erläutert. Es stellen dar:
- Figur 1: die Schnittdarstellung durch den Bearbeitungskopf und die zu bearbeitenden Werkstücke;
- Figur 2: eine andere Ausgestaltung entsprechend Figur 1 mit einer zusätzlichen Möglichkeit der Temperaturmessung;
- Figur 3: die prinzipielle Darstellung des 3D-Schweißverfahrens mit Roboter und die Haltung des Bearbeitungskopfes während des Schweißverfahrens und
- Figur 4: die prinzipielle Anordnung einer Rolle auf zu verschweißenden Werkstücken am Beispiel von Folien mit einem linienförmigen Laserstrahl in Vorschubrichtung (Figur 4A) und mit einem linienförmigen Laserstrahl quer zur Vorschubrichtung (Figur 4B) sowie eine Wellenkontur (Figur 4C).

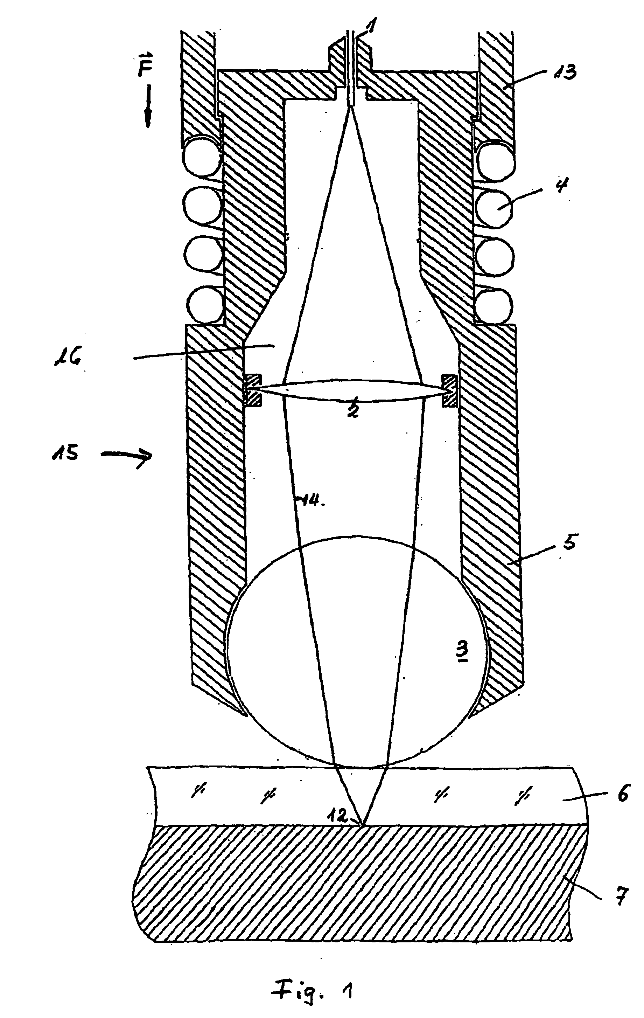

Figur 1 zeigt den Bearbeitungskopf 15 mit einer mechanischen Fassung 5, die einen Hohlraum 16 einschließt. Der Hohlraum 16 erstreckt sich in dem Ausführungsbeispiel in Längsrichtung der mechanischen Fassung 5. Am oberen Ende der mechanischen Fassung 5 gelangt über eine Lichtleitfaser 1 ein Laserstrahl 14 in diesen Hohlraum. In dem Hohlraum befindet sich eine konvergente Linse 2 und am unteren Ende eine Glaskugel 3. Die Glaskugel 3 ist in der mechanischen Fassung in alle Richtungen drehbar gelagert und drückt in dem Ausführungsbeispiel auf die Oberseite des für den Laserstrahl 14 transparenten Werkstückes 6. Durch die konvergente Linse 2 und die Glaskugel 3 wird der Laserstrahl 14 an der Auftreffstelle 12 zwischen dem transparenten Werkstück 6 und dem absorbierenden Werkstück 7 fokussiert, d.h. die Laserstrahlen werden so gebündelt, dass in der Verbindungsebene der Werkstücke der Fokusdurchmesser minimal und somit die Energiedichte maximal ist. Die mechanische Fassung 5 ist am oberen Ende in eine zylindrische Führung gelagert, wobei bei einer Bewegung der zylindrischen Führung 13 in Richtung der Werkstücke 6, 7 die Kraft über eine Federung 4 aufgebracht wird. Damit wird die mechanische Toleranz kompensiert. Grundsätzlich ist es auch möglich bei der Fassung für die Glaskugel 3 einen Reinigungsmechanismus zu integrieren, um die optische Funktion der Glaskugel 3 auch über längere Zeit gewährleisten zu können.

Ein derartiger Bearbeitungskopf kann sehr kompakt gebaut werden, da nur eine konvergente Linse 2 benötigt wird. Das Verstellen der Fokusebene kann lediglich durch die Variation der Position der konvergenten Linse 2 erreicht werden. Falls die bestrahlte Fläche auf die Glaskugel 3 wesentlich kleiner als der Durchmesser der Glaskugel 3 ist, wird die Fokusebene hauptsächlich durch die Brennweite der konvergenten Linse 2 bestimmt.

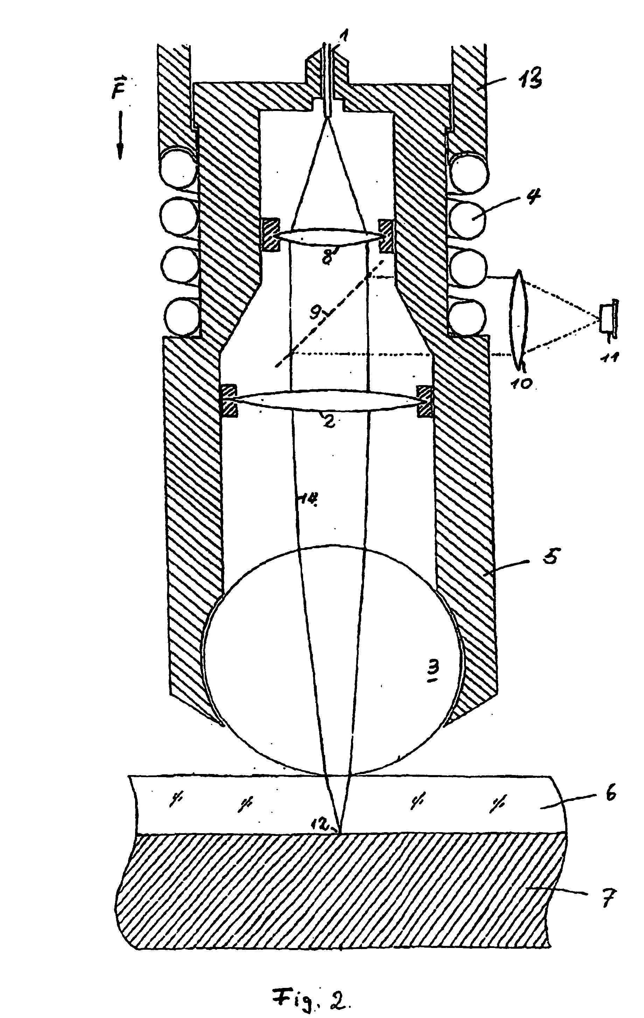

Figur 2 zeigt einen Bearbeitungskopf 15 mit einer zusätzlichen Temperaturüberwachung. In diesem Fall befindet sich in dem Hohlraum 16 eine weitere konvergente Linse 8. Diese wird benötigt, um einen kollimierten Strahlgang zu erzeugen, damit weitere optische Elemente eingekoppelt werden können. Die kollimierte Strahlung nach der konvergenten Linse 8 wird durch die konvergente Linse 2 auf die Auftreffstelle 12 unter der Glaskugel 3 fokussiert. Die Wärmestrahlung aus der Schweißstelle wird durch einen Strahlteil, der sich in dem kollimierten Strahlgang befindet, über den Strahlteiler 9 umgelenkt und über die außerhalb der mechanischen Fassung angeordneten konvergenten Linse 10 auf ein Pyrometer 11 fokussiert.

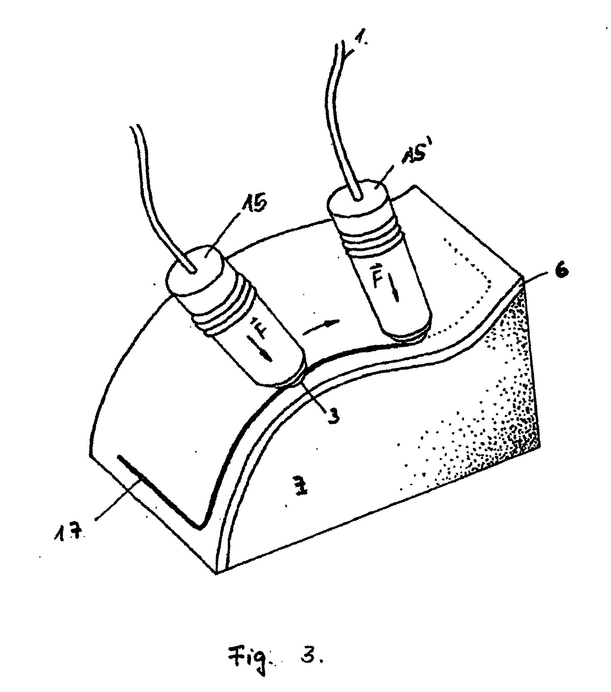

Figur 3 zeigt die prinzipielle Darstellung des 3D-Schweißvorgangs mit zwei verschiedenen Positionen des Bearbeitungskopfes 15, der entlang einer Schweißnaht 17 auf zwei unterschiedlich ausgebildeten nicht ebenen Werkstücken 6, 7 entlanggeführt wird und dabei das transparente Werkstück 6 auf das absorbierende Werkstück 7 an der Berührungsstelle durch die Glaskugel 3 zusammenpresst. Die Bewegungsrichtung des Bearbeitungskopfes 15 ist durch den Pfeil dargestellt und mit F ist die Richtung der einwirkenden Kraft gezeigt, wobei aus den beiden unterschiedlichen Positionen des Bearbeitungskopfes 15 aus der Figur ersichtlich wird, dass der Bearbeitungskopf 15 immer senkrecht auf die Oberfläche gedrückt werden muss. So ist die Stellung des Bearbeitungskopfes 15 eine andere als die des Bearbeitungskopfes 15' die Führung des Bearbeitungskopfes 15 erfolgt, wie vorstehend bereits erwähnt, mittels eines entsprechenden Robotersystems.

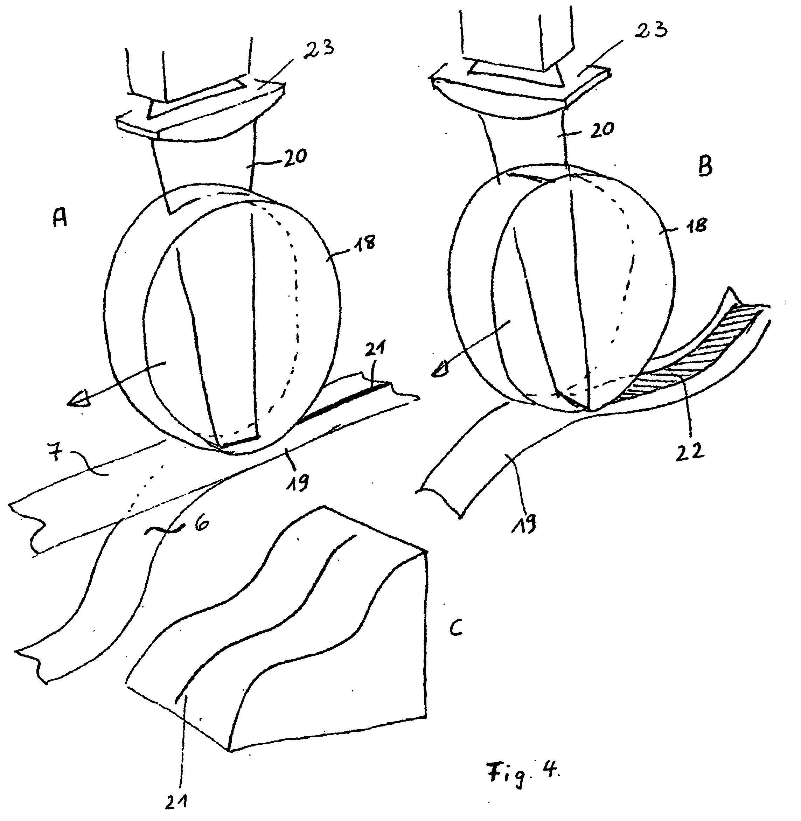

Figur 4A zeigt ein für IR-Strahlung durchlässige Rolle 18, die in Pfeilrichtung über das zu verschweißende Material 19 bewegbar ist. Der Laserstrahl 20 ist in diesem Ausführungsbeispiel linienförmig und im Auftreffbereich hinsichtlich der Länge an die Krümmung der Rolle 18 angepasst. Damit kann eine schmale Schweißnahtlinie 21 entlang einer wellenförmigen Kontur, wie in Figur 3 gezeigt, erzeugt werden. Auch hier ist es vorteilhaft, dass der Laserstrahl senkrecht auf der Oberfläche steht. In der Figur 4B ist der Laserstrahl 20 um 90° gedreht, so dass eine wesentlich breitere Schweißnaht 22 erzeugt wird. In beiden Fällen wird das obere Material entlang einer quer zur Vorschubrichtung angeordneten Linie, der Berührungslinie der Rolle 18 mit dem Material 19, zusammengepresst. Die Rolle 18 kann aus Vollmaterial oder auch rohrförmig sein. Der Laserstrahl 20 wird in bekannter Art und Weise durch eine geeignete Linse 23 in einen vorhangartigen Laserstrahl mit einer Auftrefflinie geformt. Die Anordnung gemäß dieser Figur ist in einem, wie in der Figur 1 oder 2 dargestellten Bearbeitungskopf angeordnet und die Rolle 18 ist entsprechend drehbar gelagert.

## Patentansprüche

1. Verfahren zum Verbinden von Werkstücken aus Kunststoff, wobei das obere, einer Laserquelle zugewandte Werkstück (6) aus einem für den Laserstrahl (14) transparenten Material und das untere Werkstück (7) aus einem für den Laserstrahl (14) absorbierendem Material besteht, so dass die aneinander grenzenden Kontaktflächen der beiden Werkstücke (6, 7) unter Einwirkung des Laserstrahls (14) aufschmelzen und bei der anschließenden Abkühlung unter Druck sich miteinander verbinden, **dadurch gekennzeichnet, dass** das mechanische Zusammendrücken der Werkstücke (6, 7) entweder punktuell genau an der Stelle, an der der Laserstrahl (14) auftrifft, oder in einem Bereich um die Auftreffstelle (12) des Laserstrahls (14) erfolgt, das Lenken des Laserstrahls (14) auf die zu verbindende Stelle und das mechanische Zusammendrücken der Werkstücke (6, 7) gleichzeitig durch einen über die Oberfläche des der Laserquelle zugewandten Werkstückes (6) bewegten Bearbeitungskopfes (15) durchgeführt wird, und die Dosierung der Spannkraft durch den Bearbeitungskopf (15) erfolgt.

2. Verfahren nach Anspruch 1, **dadurch gekennzeichnet, dass** die Fokusebene des Bearbeitungskopfes durch eine IR-durchlässiges Anpresselement (3, 18), vorzugsweise drehbares Anpresselement, und ein integriertes Linsenssystem (2, 8) bestimmt und durch das integrierte Linsensystem (2, 8) eingestellt wird.

3. Verfahren nach einem der vorangegangenen Ansprüche 1 oder 2, **dadurch gekennzeichnet, dass** in einem ersten Schritt die Werkstücke an einer oder mehreren definierten Stellen mit dem Bearbeitungskopf (15) lokal fixiert werden und anschließend in einem zweiten Schritt die Kontur für die vollständige Verbindung abgefahren wird.

4. Vorrichtung zum Verbinden von Werkstücken aus Kunststoff mit einem Bearbeitungskopf (15) mit Fokussiereinrichtungen (2, 8) für einen Laserstrahl (14) und Druckeinrichtungen (4) zum Zusammenpressen der Werkstücke (6, 7, 19), **dadurch gekennzeichnet, dass**
der Bearbeitungskopf (15) einen Hohlraum (16) aufweist, in dem optische Einrichtungen (2, 8) zum Formen und Lenken des Laserstrahls angeordnet sind,
der Hohlraum (16) an der Austrittsseite für die Laserstrahlen eine für den Laserstrahl (14) transparente Kugel (3) oder Rolle (18) als optisches Element aufweist, und
die Kugel (3) oder Rolle (18) drehbar in dem Bearbeitungskopf gelagert ist.

5. Vorrichtung nach Anspruch 4, **dadurch gekennzeichnet, dass** das Ende einer Lichtleitfaser (1) zum Einkoppeln des Laserstrahls in den Hohlraum (16) hineinragt.

6. Vorrichtung nach Anspruch 4 oder 5, **dadurch gekennzeichnet, dass** in den Hohlraum (16) ein Temperaturmessgerät (11) einkoppelbar ist.

7. Vorrichtung nach einem der Ansprüche 4 bis 6, **dadurch gekennzeichnet, dass** der Bearbeitungskopf (15) in Längsrichtung federnd ausgebildet ist.

8. Vorrichtung nach einem der Ansprüche 4 bis 7, **dadurch gekennzeichnet, dass** mittels der optischen Einrichtung (2) der Fokusdurchmesser und die Fokusebene einstellbar ist.

## Claims

1. A method for joining workpieces made from plastic, the upper workpiece (6), facing a laser source, consisting of a material transparent to the laser beam (14), and the lower workpiece (7) consisting of a material absorbent to the laser beam (14), such that the mutually bordering contact surfaces for the two workpieces (6, 7) melt under the effect of the laser beam (14) and are joined to one another under pressure during the subsequent cooling, wherein the mechanical compression of the workpieces (6, 7) occurs either in punctiform fashion at the site at which the laser beam (14) impinges, or in a region about the point of impingement (12) of the laser beam (14), the guiding of the laser beam (14) onto the site to be joined, and the mechanical compression of the workpieces (6, 7), are carried out simultaneously by a machining head (15) moved over the surface of the workpiece (6) facing the laser source, and the dosing of the clamping force is performed by the machining head (15).

2. The method as claimed in claim 1, wherein the focal plane of the machining head is determined by an IR-transparent pressure element (3, 18), preferably a rotary pressure element, and an integrated lens system (2, 8) and is set by the integrated lens system (2, 8).

3. The method as claimed in either of the preceding claims 1 or 2, wherein the workpieces are locally fixed in a first step at one or more defined sites with the aid of the machining head (15), and subsequently the contour for the entire joint is traveled along in a second step.

4. A device for joining workpieces made from plastic, having a machining head (15) with focusing devices (2, 8) for a laser beam (14) and pressure-exerting devices (4) for compressing the workpieces (6, 7, 19), wherein
the machining head (15) has a cavity (16) in which optical devices (2, 8) for shaping and for guiding the laser beam are arranged,
on the exit side for the laser beams the cavity (16) has as optical element a ball (3) or roller (18) that is transparent to the laser beam (14), and
the ball (3) or roller (18) is rotatably mounted in the machining head.

5. The device as claimed in claim 4, wherein the end of an optical fiber (1) projects into the cavity (16) for coupling in the laser beam.

6. The device as claimed in claim 4 or 5, wherein a thermometer (11) can be coupled into the cavity (16).

7. The device as claimed in one of claims 4 to 6, wherein the machining head (15) is resilient in the longitudinal direction.

8. The device as claimed in one of claims 4 to 7, wherein the focal diameter and the focal plane can be set by means of the optical device (2).

## Revendications

1. Procédé de liaison de pièces en matière plastique, la pièce supérieure (6), tournée vers une source laser, étant constituée d'un matériau transparent pour le rayon laser (14) et la pièce inférieure (7) d'un matériau absorbant pour le rayon laser (14), de sorte que les surfaces de contact adjacentes l'une à l'autre des deux pièces (6, 7) fondent sous l'effet du rayon laser (14) et sont reliées l'une à l'autre à l'occasion d'un refroidissement consécutif sous pression, **caractérisé en ce que** la compression mécanique des pièces (6, 7) s'effectue soit ponctuellement exactement au point d'impact du rayon laser (14), soit dans une zone autour du point d'impact (12) du rayon laser (14), le guidage du rayon laser (14) au point destiné à être relié et la compression mécanique des pièces (6, 7) sont réalisés simultanément par une tête d'usinage (15) déplacée sur la surface de la pièce (6) tournée vers la source laser, et le dosage de la force de tension s'effectue par la tête d'usinage (15).

2. Procédé selon la revendication 1, **caractérisé en ce que** le plan de foyer de la tête d'usinage est défini par un élément de compression (3, 18) laissant passer les infrarouges, de préférence un élément de compression rotatif, et un système de lentilles intégré (2, 8) et est réglé par le système de lentilles intégré (2, 8).

3. Procédé selon l'une quelconque des revendications 1 ou 2, **caractérisé en ce que** les pièces sont fixées localement, au cours d'une première étape, en un ou plusieurs point(s) défini(s), avec la tête d'usinage (15) et ensuite, au cours d'une seconde étape, le contour pour la liaison complète est lancé.

4. Dispositif de liaison de pièces en matière plastique avec une tête d'usinage (15) comprenant des systèmes de focalisation (2, 8) pour un rayon laser (14) et des systèmes de pression (4) destinés à comprimer les pièces (6, 7, 19), **caractérisé en ce que**
la tête d'usinage (15) comprend une cavité (16), dans laquelle sont disposés des systèmes optiques (2, 8) destinés à former et à guider le rayon laser,
la cavité (16) comprend comme élément optique, sur le côté de sortie pour les rayons laser, une sphère (3) ou un rouleau (18) transparent (e) pour le rayon laser (14), et
la sphère (3) ou le rouleau (18) est logé(e) de manière rotative dans la tête d'usinage.

5. Dispositif selon la revendication 4, **caractérisé en ce que** l'extrémité d'une fibre optique (1) destinée à injecter le rayon laser dépasse dans la cavité (16).

6. Dispositif selon la revendication 4 ou 5, **caractérisé en ce qu'**un appareil de mesure de la température (11) peut être mis en liaison avec la cavité (16).

7. Dispositif selon l'une quelconque des revendications 4 à 6, **caractérisé en ce que** la tête d'usinage (15) est conçue de manière élastique dans la direction longitudinale.

8. Dispositif selon l'une quelconque des revendications 4 à 7, **caractérisé en ce que** le diamètre de foyer et le plan de foyer peuvent être réglés au moyen du système optique (2).
